# EUROPÄISCHE PATENTSCHRIFT

(11) **EP 2 215 443 B1**
(45) Veröffentlichungstag und Bekanntmachung des Hinweises auf die Patenterteilung: **15.02.2017**
(21) Anmeldenummer: 08871175.9
(22) Anmeldetag: 19.12.2008
(51) Int. Cl.: G01K 3/04, G09F 3/02

(54) **WARENKENNZEICHNUNG**
PRODUCT LABELING
ÉLÉMENT DE MARQUAGE DE PRODUITS

(30) Priorität: 21.01.2008 DE 102008005371
(43) Veröffentlichungstag der Anmeldung: 11.08.2010
(73) Patentinhaber: Bizerba SE & Co. KG, 72336 Balingen (DE)
(72) Erfinder: CONZELMANN, Dieter, 72458 Albstadt (DE)
(74) Vertreter: Manitz, Finsterwald & Partner GbR
(86) Internationale Anmeldenummer: PCT/EP2008/010945
(87) Internationale Veröffentlichungsnummer: WO 2009/092428

(56) Entgegenhaltungen:
- DE-U1-202006 010 942
- US-A- 6 113 857
- US-A1- 2004 013 839
- US-A1- 2004 248 305
- US-A1- 2006 247 967
- US-A1- 2007 041 423

## Beschreibung

Die vorliegende Erfindung betrifft eine Warenkennzeichnung, nämlich ein Mehrlagenetikett, insbesondere ein Doppellagenetikett.

Zur Warenkennzeichnung werden häufig Etiketten verwendet, die auf der Verpackung eines Produkts oder dem Produkt selbst angebracht werden. Ein Etikett kann beispielsweise Angaben über den Inhalt, den Preis, den Hersteller des Produkts oder dergleichen beinhalten.

Zusätzlich oder alternativ können Etiketten auch mit aktivierbaren temperatur- und/oder zeitsensitiven Indikatoren versehen sein, die dazu geeignet sind, anzuzeigen, ob die mit den Etiketten versehenen Produkte nach einer Aktivierung der Indikatoren ausreichend kühl und/oder ein vorbestimmtes Alter nicht überschreitend gelagert werden.

Unter einem aktivierbaren temperatur- und/oder zeitsensitiven Indikator im Sinne der vorliegenden Anmeldung ist insbesondere ein Indikator zu verstehen, der zur Aktivierung mit elektromagnetischer Strahlung bestrahlt wird, beispielsweise mit Licht, insbesondere UV-Licht, wodurch der Indikator eine bestimmte Verfärbung erfährt. Im Anschluss an diese Aktivierung tritt dann, sofern keine neuerliche Aktivierung erfolgt, eine Entfärbung des Indikators ein, wobei das Maß der Entfärbung von der seit der Aktivierung verstrichenen Zeit und/oder von den Temperatureinflüssen, denen der Indikator seit der Aktivierung ausgesetzt war, abhängig ist.

Wenn dann zu einem Prüfzeitpunkt festgestellt wird, dass das Maß der Entfärbung einen vorgegebenen Wert übersteigt, beispielsweise durch Vergleich mit einem Referenzfeld, kann daraus geschlossen werden, dass das Produkt ein gewisses Alter bereits überschritten hat und/oder nicht ausreichend kühl gelagert wurde. Das Produkt ist daher für eine weitere Verwendung und/oder den Verkauf nicht geeignet.

Ein aktivierbarer temperatur- und zeitsensitiver Indikator ist beispielsweise aus der deutschen Patentschrift DE 198 03 208 C2 bekannt. US 2004/0248305 A1 offenbart eine Ware, die mit einem Marker in Form eines Barcodes versehen ist, über den eine Komponente mit einem temperatur- und zeitsensitiven Indikator abziehbar aufgeklebt werden kann. US 2007/0041423 A1 offenbart eine Verpackung, die mit einem Barcode und mit einem temperatursensitiven und/oder zeitsensitiven Indikator in Form eines Labels versehen ist. Der Barcode kann direkt auf die Verpackung oder auf ein Label, welches auf die Verpackung aufgebracht wird, aufgedruckt werden.

Indikatoren der genannten Art sind in Verbindung mit jeglicher Art von verderblichen Produkten sinnvoll einsetzbar. Insbesondere sind sie für Lebensmittelprodukte, Arzneimittel, Blutkonserven, etc. geeignet.

Ein solcher Indikator ist dazu geeignet, den Frischegrad eines Produkts anzuzeigen. Es kann der Frischegrad ab dem Herstellungs- oder Verpackungszeitpunkt über den gesamten Vertriebsweg inklusive Lagerzeiten erfasst und angezeigt werden. Ein Händler kann somit gegenüber dem Kunden den Frischezustand seines Produkts zum Verkaufszeitpunkt eindeutig und auf einfache Art und Weise darlegen. Der Frischegrad ist ein wichtiges Qualitätskriterium und damit ein Verkaufs- und Werbeargument. Der Händler/Hersteller möchte jedoch nur für solche Einflüsse garantieren, die in seinem Einflussbereich liegen.

Der Erfindung liegt daher die Aufgabe zugrunde, eine als Mehrlagenetikett, insbesondere Doppellagenetikett ausgebildete Warenkennzeichnung zu schaffen, die den Frischegrad von verderblichen Produkten anzeigt und dabei verfälschte Anzeigen durch darüber hinausgehende Einflüsse vermeidet.

Diese Aufgabe wird durch eine als Mehrlagenetikett, insbesondere Doppellagenetikett ausgebildete Warenkennzeichnung mit den Merkmalen des Anspruchs 1 gelöst, und insbesondere durch eine als Mehrlagenetikett, insbesondere Doppellagenetikett ausgebildete Warenkennzeichnung, mit einem Basisetikett, das auf der Verpackung eines Produkts oder dem Produkt selbst anbringbar ist, und mit einer Oberlage, die abziehbar auf dem Basisetikett angebracht ist, wobei die Oberlage mit einem aktivierbaren temperatursensitiven und/oder zeitsensitiven Indikator versehen und das Basisetikett frei von einem derartigen Indikator ist.

Die insbesondere als Selbstklebeetikett ausgebildete Warenkennzeichnung umfasst ein Basisetikett, über das die Warenkennzeichnung an der Verpackung oder dem Produkt selbst angebracht werden kann. Über dem Basisetikett befindet sich die Oberlage mit dem Indikator.

Da die Oberlage lösbar an dem Basisetikett angebracht ist, kann der Händler am Check-Out, d.h. beispielsweise an der Kasse oder dem jeweiligen Point Of Sale (POS), die Oberlage mit dem Indikator abziehen. Da das Basisetikett indikatorfrei ist, endet die Möglichkeit der Überwachung der Frische eines Produkts anhand des Indikators damit zum Zeitpunkt des Verkaufs des jeweiligen Produkts, d.h. spätestens an der Ausgangstür des Händlers. Dadurch wird der Einfluss, der nach Verlassen der durch die Herstellung und/oder den Handel vorgegebenen Vertriebs- und/oder Kühlkette auf das Produkt erfolgt, eliminiert. Ein Händler kann so zum Verkaufszeitpunkt die Frische des Produkts einfach darlegen und dokumentieren.

Der Indikator ist auf die Oberlage aufgedruckt. Der Indikator befindet sich also auf der dem Basisetikett abgewandten Seite der Oberlage. Beispielsweise kann der Indikator mittels eines Flexodruckverfahrens auf die Oberlage aufgedruckt sein. Das Basisetikett weist keinen Indikator auf. Durch Ablösen der Oberlage wird der Indikator vollständig entfernt.

Um eine unerwünschte neuerliche Aktivierung des Indikators nach einer bereits erfolgten Aktivierung zu vermeiden, ist vorgesehen, dass auf dem Indikator ein entsprechender Filter, insbesondere ein UV-Filter, aufgebracht ist, der für elektromagnetische Strahlung des jeweils relevanten Wellenlängenbereichs zumindest weitgehend undurchlässig ist.

Nach einer Ausbildung der Erfindung ist das Basisetikett auf seiner der Oberlage zugewandten Seite mit Druckfarbe bedruckt. Mit der Druckfarbe können beispielsweise Wareninformation, Bilder und/oder Werbeslogans aufgedruckt werden. Die Wareninformation kann unter anderem einen Preis, ein Gewicht, ein Haltbarkeitsdatum, einen Text oder Schmuckelemente für die jeweilige Ware oder dergleichen enthalten und ein- oder mehrfarbig ausgeführt sein. Bevorzugt ist auf das Basisetikett auch ein Referenzfeld für den Indikator aufgedruckt. Insbesondere ist das Basisetikett auf der von der Oberlage abgedeckten Seite bedruckbar und/oder ist die Oberlage rückstandsfrei ablösbar, so dass nach Abziehen der Oberlage dieser Druck sichtbar wird.

Das Druckbild kann auch einen Code, insbesondere Barcode, umfassen, wobei unter dem Begriff "Barcode" auch ein 2D-Strichcode, beispielsweise ein Matrixcode, zu verstehen ist. Der Code kann beispielsweise den Aktivierungszeitpunkt des Indikators, eine Herstellerkennung, einen das Produkt kennzeichnenden Identifikationsschlüssel, Vertriebsinformation und/oder sonstige Wareninformation beinhalten. Auf diese Weise bleibt auch nach Abziehen der Oberlage die Möglichkeit erhalten, die Herstellung und den Vertrieb des jeweiligen Produkts rückzuverfolgen.

Das Basisetikett kann auf seiner der Oberlage zugewandten Seite nur teilweise von der Oberlage bedeckt sein, d.h. das Basisetikett ist in diesem Fall nicht vollständig von der Oberlage bedeckt. In dem nicht bedeckten Bereich des Basisetiketts kann daher ein Druckwerk, beispielsweise ein Barcode, aufgedruckt sein, das sowohl bei aufgebrachter Oberlage als auch bei abgezogener Oberlage vorhanden ist.

Nach einer anderen Ausbildung der Erfindung ist zwischen der Oberlage und dem Basisetikett eine Klebeschicht vorhanden, die beim Abziehen der Oberlage von dem Basisetikett auf der dem Basisetikett zugewandten Seite der Oberlage verbleibt. Dies ermöglicht ein leichtes und rückstandsfreies Abziehen der Oberlage von dem Basisetikett. Somit kann direkt unterhalb der Oberlage Druckinformation stehen, die nach Abziehen sichtbar wird.

Vorzugsweise ist zum Abziehen der Oberlage von dem Basisetikett eine mit der Oberlage verbundene Abziehlasche vorgesehen. Die Abziehlasche kann beispielsweise in einem Eckbereich der Oberlage angeordnet sein. Durch die Abziehlasche wird das Abziehen der Oberlage von dem Basisetikett erleichtert. Insbesondere ist die Abziehlasche an ihrer Unterseite nicht mit einer Klebeschicht versehen, so dass ein Haften der Abziehlasche an dem Basisetikett, der Verpackung und/oder dem Produkt vermieden wird.

Vorteilhaft kann die Warenkennzeichnung eine Kontroll- und/oder Schutzeinrichtung aufweisen, insbesondere nach Art eines Siegels, die ein Abziehen der Oberlage irreversibel, dauerhaft und/oder zumindest weitgehend manipulationssicher anzeigt. In diesem Fall kann ein nochmaliges Anbringen einer Oberlage auf das Basisetikett, nachdem die Oberlage der Warenkennzeichnung einmal abgezogen wurde, erkannt werden.

Beispielsweise kann die Kontroll- und/oder Schutzeinrichtung eine Perforation zwischen dem Basisetikett und der Oberlage umfassen, d.h. das Basisetikett kann mit der Oberlage über eine Perforation verbunden sein, die beim Ablösen der Oberlage zerstört wird. Alternativ oder zusätzlich kann die Kontroll- und/oder Schutzeinrichtung einen sich von dem Basisetikett bis über die Oberlage erstreckenden Kontrolldruck umfassen. Der Kontrolldruck kann beispielsweise ein spezielles Muster sein, z. B. ein Linienmuster, ein Punktmuster oder eine Schraffur, das beim Ablösen der Oberlage zerstört wird. Alternativ oder zusätzlich kann die Kontroll- und/oder Schutzeinrichtung darin bestehen, dass beim Abziehen der Oberlage ein Teil des Basisetiketts mit abgelöst wird, um das Entfernen der Oberlage anzuzeigen. Dies kann z.B. dadurch erreicht werden, dass der Teil des Basisetiketts zu der Oberlage eine stärke Bindung aufweist als zu der Verpackung des jeweiligen Produkts oder dem Produkt selbst.

Weitere Ausführungsformen der Erfindung sind in den Unteransprüchen, der Beschreibung und der Zeichnung beschrieben.

Die Erfindung wird nachfolgend anhand eines Ausführungsbeispiels unter Bezugnahme auf die Zeichnung beschrieben.

In dieser zeigen, jeweils in schematischer Darstellung,
- Fig. 1: eine erfindungsgemäße Warenkennzeichnung in einer Querschnittsansicht, und
- Fig. 2: eine erfindungsgemäße Warenkennzeichnung in einer Draufsicht vor und nach dem Abziehen einer Oberlage.

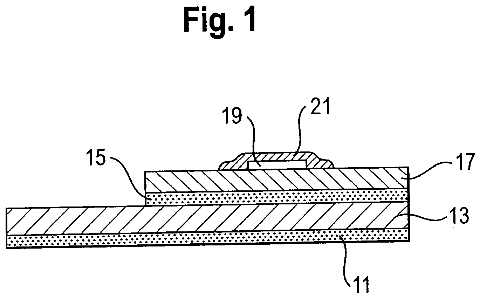

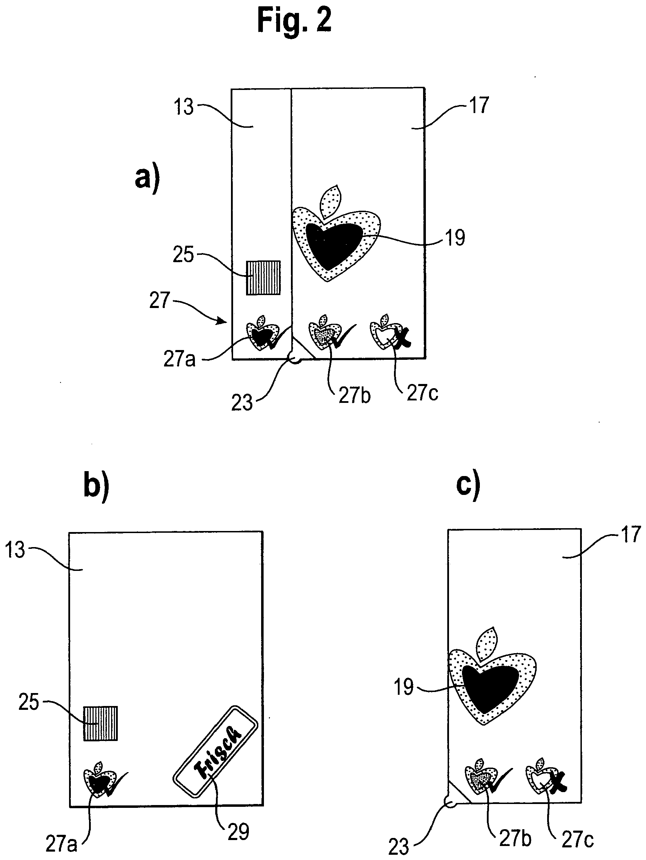

Die in Fig. 1 gezeigte Warenkennzeichnung umfasst zunächst ein Basisetikett 13, das über eine an der Unterseite des Basisetiketts 13 vorhandene Klebeschicht 11 an einer Verpackung eines Produkts oder dem Produkt selbst anbringbar ist. Die Warenkennzeichnung ist daher als Selbstklebeetikett ausgebildet. Das Basisetikett 13 ist an seiner Oberseite bedruckt, wie nachstehend im Zusammenhang mit Fig. 2 noch näher erläutert wird.

Darüber hinaus umfasst die Warenkennzeichnung eine Oberlage 17, die über eine weitere Klebeschicht 15 auf der Oberseite des Basisetiketts 13 angebracht ist. Die Größe und/oder Positionierung der Oberlage 17 auf dem Basisetikett 13 ist in dem gewählten Beispiel dabei derart, dass die Oberseite des Basisetiketts 13 nur teilweise von der Oberlage 17 bedeckt ist, wie nachstehend im Zusammenhang mit Fig. 2 ebenfalls noch näher erläutert wird. Die Oberlage 17 steht dabei nicht über das Basisetikett 13 hervor. Grundsätzlich ist es jedoch auch möglich, dass die Oberlage das Basisetikett vollständig bedeckt und/oder die Oberlage und das Basisetikett zumindest teilweise überlappen.

Auf die Oberseite der Oberlage 17 ist ein aktivierbarer temperatur- und/ oder zeitsensitiver Indikator 19 aufgedruckt. Der Indikator 19 ist dafür vorgesehen, den Frischegrad des Produkts, an dem die Warenkennzeichnung angebracht ist, anzuzeigen, wie vorstehend erläutert wurde. Auf den Indikator 19 wiederum ist ein UV-Schutzfilter 21 aufgebracht, so dass ein Schutz des Indikators 19 gegen Manipulation, d.h. gegen eine erneute Aktivierung, gewährleistet ist. Der UV-Schutzfilter 21 überdeckt dabei die gesamte freiliegende Oberfläche des Indikators 19. Anders als in Fig. 1 dargestellt, kann der UV-Schutzfilter 21 die Oberseite der Oberlage 17 auch vollständig bedecken. Das Basisetikett 13 ist indikatorfrei.

Die Oberlage 17 ist zusammen mit dem Indikator 19 (und dem UV-Schutzfilter 21) von dem Basisetikett 13 abziehbar. Die Oberlage 17, das Basisetikett 13 und die weitere Klebeschicht 15 werden dabei derart gewählt, dass beim Abziehen der Oberlage 17 von dem Basisetikett 13 die weitere Klebeschicht 15 auf der Unterseite der Oberlage 17 verbleibt, so dass ein rückstandsfreies Abziehen der Oberlage 17 mit der weiteren Klebeschicht 15 von dem Basisetikett 13 gewährleistet ist. Darüber hinaus ist es von Vorteil, wenn die Oberlage 17, das Basisetikett 13 und die weitere Klebeschicht 15 derart aufeinander abgestimmt sind, dass die Oberlage 17 zerstörungsfrei, zusammenhängend, in einem Stück und/oder als Ganzes von dem Basisetikett 13 abziehbar ist, so dass der Aufwand zum Abziehen der Oberlage 17 möglichst klein gehalten wird.

Die Darstellung der Warenkennzeichnung in Fig. 1 ist nicht maßstabsgetreu. Insbesondere sind die Dicken der einzelnen Schichten im Verhältnis zu den lateralen Ersteckungen der Schichten vergrößert dargestellt.

Bei der in Fig. 2a gezeigten Warenkennzeichnung kann es sich beispielsweise um eine Draufsicht der in Fig. 1 dargestellten Warenkennzeichnung handeln. Fig. 2a zeigt ein Basisetikett 13, dessen Oberseite mittig und rechts, d.h. zu ca. 2/3, von einer Oberlage 17 bedeckt ist. Links ist die Oberseite des Basisetiketts 13 unbedeckt. Auf der Oberseite der Oberlage 17 ist ein aktivierbarer temperatur- und/oder zeitsensitiver Indikator 19 aufgedruckt.

Darüber hinaus ist ein aus normaler Druckfarbe bestehendes Referenz- oder Vergleichsfeld 27 für den Indikator 19 erkennbar. Das Referenzfeld 27 umfasst ein erstes, dunkles Farbenfeld 27a, welches die Farbe des Indikators 19 unmittelbar nach einer Aktivierung des Indikators 19 anzeigt, ein zweites, etwas helleres Farbenfeld 27b, welches die Farbe des aktivierten Indikators 19 nach einer mittleren Zeit-Temperatur-Belastung des Indikators 19 anzeigt, und ein noch helleres Farbenfeld 27c, welches die Farbe des aktivierten Indikators 19 bei einer langen bzw. hohen Zeit-Temperatur-Belastung des Indikators 19 anzeigt. Die Farbe des ersten Farbenfelds 27a symbolisiert den Zustand "frisch", die Farbe des zweiten Farbenfelds 27b den Zustand "mittel" und die Farbe des dritten Farbenfelds 27c den Zustand "nicht mehr frisch". Die Farbe des in Fig. 2a gezeigten Indikators 19 entspricht der Farbe des dunklen Farbenfelds 27a. Das mit der Warenkennzeichnung versehene Produkt ist daher "frisch".

Das erste Farbenfeld 27a ist auf der linken Seite der Warenkennzeichnung und damit auf dem Basisetikett 13 aufgedruckt. Das zweite Farbenfeld 27b und das dritte Farbenfeld 27c sind in der Mitte bzw. auf der rechten Seite der Warenkennzeichnung und daher auf der Oberlage 17 aufgedruckt. Beim Abziehen der Oberlage 17 verbleibt auf dem "Rest-Etikett" daher nur das erste Farbenfeld 27a. Darüber hinaus ist auf der linken Seite der Warenkennzeichnung ein Barcode 25 aufgedruckt, um eine Warenrückverfolgung auch ohne Oberlage 17 zu ermöglichen.

Um das Abziehen der Oberlage 17 von dem Basisetikett 13 zu erleichtern, ist eine mit der Oberlage 17 verbundene Abziehlasche 23 vorgesehen, die in dem in Fig. 2a gezeigten Beispiel in dem linken unteren Eckbereich der Oberlage 17 positioniert ist. Um das Fassen der Abziehlasche 23 zu erleichtern, steht die Abziehlasche 23 über das Basisetikett 13 hervor und es ist zwischen der Abziehlasche 23 und dem Basisetikett 13 keine Klebeschicht vorhanden.

Wird die Oberlage 17 mittels der Abziehlasche 23 von dem Basisetikett 13 abgezogen, liegt der in Fig. 2b gezeigte Zustand vor. Die von dem Basisetikett 13 gelöste Oberlage 17 mit dem Indikator 19, den Farbenfeldern 27b und 27c und der Abziehlasche 23 wird nicht mehr gebraucht und kann entsorgt werden. Das Basisetikett 13 hingegen verbleibt auf der Verpackung des Produkts oder dem Produkt selbst.

Aus Fig. 2b ist erkennbar, dass die Oberseite des Basisetiketts 13 auch in dem Bereich mit Druckfarbe bedruckt ist, der bei angebrachter Oberlage 17 (Fig. 2a) durch die Oberlage 17 verdeckt ist. Das Basisetikett 13 weist in diesem Bereich beispielsweise den Text "Frisch" 29 nach Art eines Stempelabdrucks auf. Alternativ oder zusätzlich kann hier beispielsweise auch ein anderer Text oder ein Bild aufgedruckt sein. Durch das ursprünglich von der Oberlage 17 verdeckte Druckbild, d.h. durch den Text 29, ist klargestellt, dass das Produkt zum Zeitpunkt des Abziehens der Oberlage 17, d.h. zum Zeitpunkt des Verkaufs, frisch war.

Durch die erfindungsgemäße Warenkennzeichnung, die auch als Mehrlagenetikett oder Doppellagenetikett bezeichnet werden kann, wird ermöglicht, den Indikator beim Verkauf des Produkts an der Kasse auf einfache Weise zu "entwerten".

### Bezugszeichenliste

- 11: Klebeschicht
- 13: Basisetikett
- 15: Klebeschicht
- 17: Oberlage
- 19: Indikator
- 21: UV-Schutzfilter
- 23: Abziehlasche
- 25: 2D-Code
- 27: Referenzfeld
- 27a: Farbenfeld
- 27b: Farbenfeld
- 27c: Farbenfeld
- 29: Text

## Patentansprüche

1. Mehrlagenetikett, insbesondere Doppellagenetikett, mit einem Basisetikett (13), das auf der Verpackung eines Produkts oder dem Produkt selbst anbringbar ist, und mit einer Oberlage (17), die abziehbar auf dem Basisetikett (13) angebracht ist, wobei die Oberlage (17) mit einem aktivierbaren temperatursensitiven und/oder zeitsensitiven Indikator (19) versehen und das Basisetikett (13) frei von einem derartigen Indikator ist, wobei der Indikator (19) auf die Oberlage (17) aufgedruckt ist, und wobei zur Vermeidung einer erneuten Aktivierung des Indikators (19) nach einer Aktivierung auf dem Indikator (19) ein entsprechender Filter (21), insbesondere ein UV-Filter, aufgebracht ist.

2. Mehrlagenetikett nach einem der vorstehenden Ansprüche,
**dadurch gekennzeichnet,**
**dass** das Basisetikett (13) auf seiner der Oberlage (17) zugewandten Seite mit Druckfarbe bedruckt ist.

3. Mehrlagenetikett nach Anspruch 2,
**dadurch gekennzeichnet,**
**dass** das Druckbild einen Code (25), insbesondere Barcode, umfasst.

4. Mehrlagenetikett nach einem der vorstehenden Ansprüche,
**dadurch gekennzeichnet,**
**dass** das Basisetikett (13) auf seiner der Oberlage (17) zugewandeten Seite nur teilweise von der Oberlage (17) bedeckt ist.

5. Mehrlagenetikett nach einem der vorstehenden Ansprüche,
**dadurch gekennzeichnet,**
**dass** zwischen der Oberlage (17) und dem Basisetikett (13) eine Klebeschicht (15) vorhanden ist, die beim Abziehen der Oberlage (17) von dem Basisetikett (13) auf der dem Basisetikett (13) zugewandten Seite der Oberlage (17) verbleibt.

6. Mehrlagenetikett nach einem der vorstehenden Ansprüche,
**dadurch gekennzeichnet,**
**dass** zum Abziehen der Oberlage (17) von dem Basisetikett (13) eine mit der Oberlage (17) verbundene Abziehlasche (23) vorgesehen ist.

7. Mehrlagenetikett nach einem der vorstehenden Ansprüche,
**dadurch gekennzeichnet,**
**dass** eine Kontroll- und/oder Schutzeinrichtung vorgesehen ist, die ein Abziehen der Oberlage (17) von dem Basisetikett (13) irreversibel, dauerhaft und/oder manipulationssicher anzeigt.

8. Mehrlagenetikett nach Anspruch 7,
**dadurch gekennzeichnet,**
**dass** die Kontroll- und/oder Schutzeinrichtung eine Perforation zwischen dem Basisetikett (13) und der Oberlage (17) umfasst.

9. Mehrlagenetikett nach Anspruch 7 oder 8,
**dadurch gekennzeichnet,**
**dass** die Kontroll- und/oder Schutzeinrichtung einen sich von dem Basisetikett (13) bis über die Oberlage (17) erstreckenden Kontrolldruck umfasst.

10. Mehrlagenetikett nach einem der Ansprüche 7 bis 9,
**dadurch gekennzeichnet,**
**dass** die Kontroll- und/oder Schutzeinrichtung umfasst, dass beim Abziehen der Oberlage (17) ein Teil des Basisetiketts (13) mit abgelöst wird.

## Claims

1. A multilayer label, in particular a double-layer label, having a base label (13) which can be attached to the packaging of a product or to the product itself; and having an upper layer (17) which is attached to the base label (13) such that it can be pulled off, wherein the upper layer (17) is provided with a temperature-sensitive and/or time-sensitive indicator (19), which can be activated, and the base label (13) is free of such an indicator; wherein the indicator (19) is printed onto the upper layer (17); and wherein a corresponding filter (21), in particular a UV filter, is applied to the indicator (19) to avoid a renewed activation of the indicator (19) after an activation.

2. A multilayer label in accordance with one of the preceding claims,
**characterized in that**
the base label (13) is printed using ink at its side facing the upper layer (17).

3. A multilayer label in accordance with claim 2,
**characterized in that**
the print image comprises a code (25), in particular a barcode.

4. A multilayer label in accordance with any one of the preceding claims,
**characterized in that**
the base label (13) is only partly covered by the upper layer (17) at its side facing the upper layer (17).

5. A multilayer label in accordance with any one of the preceding claims,
**characterized in that**
an adhesive layer (15) is present between the upper layer (17) and the base label (13) and remains at the side of the upper layer (17) facing the base label (13) on the pulling of the upper layer (17) from the base label (13).

6. A multilayer label in accordance with any one of the preceding claims,
**characterized in that**
a pull tab (23) connected to the upper layer (17) is provided for the pulling of the upper layer (17) from the base label (13).

7. A multilayer label in accordance with any one of the preceding claims,
**characterized in that**
a checking device and/or protective device is provided which indicates a pull off of the upper layer (17) from the base label (13) irreversibly, permanently and/or in a manner secure against manipulation.

8. A multilayer label in accordance with claim 7,
**characterized in that**
the checking device and/or protective device comprises a perforation between the base label (13) and the upper layer (17).

9. A multilayer label in accordance with claim 7 or claim 8,
**characterized in that**
the checking device and/or protective device comprises a checking print which extends from the base label (13) up to and across the upper layer (17).

10. A multilayer label in accordance with any one of the claims 7 to 9,
**characterized in that**
the checking device and/or protective device comprises a part of the base label (13) also being released on the pulling off of the upper layer (17).

## Revendications

1. Étiquette multicouche, en particulier étiquette à double couche, comprenant une étiquette de base (13) qui peut être appliquée sur l'emballage d'un produit ou sur le produit lui-même, et comprenant une couche supérieure (17), appliquée sur l'étiquette de base (13) de manière à pouvoir être pelée, dans laquelle la couche supérieure (17) est pourvue d'un indicateur (19) activable sensible à la température et/ou sensible au temps, et l'étiquette de base (13) est dépourvue d'un tel indicateur, dans laquelle l'indicateur (19) est imprimé sur la couche supérieure (17) et, pour empêcher une nouvelle activation de l'indicateur (19) après une activation, un filtre correspondant (21), en particulier un filtre à ultraviolet, est appliqué sur l'indicateur (19).

2. Étiquette multicouche selon l'une des revendications précédentes,
**caractérisée en ce que** l'étiquette de base (13) est imprimée avec une encre d'impression sur son côté tourné vers la couche supérieure (17).

3. Étiquette multicouche selon la revendication 2,
**caractérisée en ce que** l'image imprimée inclut un code (25), en particulier un code à barres.

4. Étiquette multicouche selon l'une des revendications précédentes,
**caractérisée en ce que**, sur son côté tourné vers la couche supérieure (17), l'étiquette de base (13) est recouverte uniquement partiellement par la couche supérieure (17).

5. Étiquette multicouche selon l'une des revendications précédentes,
**caractérisée en ce qu'**il est prévu une couche de colle (15), entre la couche supérieure (17) et l'étiquette de base (13), qui demeure sur le côté de la couche supérieure (17) tourné vers l'étiquette de base (13) lors du pelage de la couche supérieure (17) en éloignement de l'étiquette de base (13).

6. Étiquette multicouche selon l'une des revendications précédentes,
**caractérisée en ce que** pour peler la couche supérieure (17) en éloignement de l'étiquette de base (13), il est prévu une languette de pelage (23) reliée à la couche supérieure (17).

7. Étiquette multicouche selon l'une des revendications précédentes,
**caractérisée en ce qu'**il est prévu un moyen de contrôle et/ou de protection qui indique de façon irréversible, durable et/ou sûre vis-à-vis des manipulations, un pelage de la couche supérieure (17) en éloignement de l'étiquette de base (13).

8. Étiquette multicouche selon la revendication 7,
**caractérisée en ce que** le moyen de contrôle et/ou de protection inclut une perforation entre l'étiquette de base (13) et la couche supérieure (17).

9. Étiquette multicouche selon la revendication 7 ou 8,
**caractérisée en ce que** le moyen de contrôle et/ou de protection inclut une impression de contrôle qui s'étend depuis l'étiquette de base (13) jusqu'au-delà de la couche supérieure (17).

10. Étiquette multicouche selon l'une des revendications 7 à 9,
**caractérisée en ce que** le moyen de contrôle et/ou de protection inclut qu'une partie de l'étiquette de base (13) est détachée conjointement lors du pelage de la couche supérieure (17).
